# EUROPEAN PATENT APPLICATION

(11) **EP 4 209 925 A1**
(43) Date of publication of application: **12.07.2023**
(21) Application number: 22212995.9
(22) Date of filing: 13.12.2022
(51) Int. Cl.: G06F 16/28

(54) **INFORMATION PROCESSING DEVICE, VEHICLE, INFORMATION PROCESSING METHOD, AND NON-TRANSITORY COMPUTER-READABLE RECORDING MEDIUM RECORDED WITH INFORMATION PROCESSING PROGRAM**

(30) Priority: 11.01.2022 JP 2022002644
(71) Applicant: TOYOTA JIDOSHA KABUSHIKI KAISHA, Aichi-Ken 471-8571 (JP); DENSO CORPORATION, Kariya-city, Aichi-pref., 448-8661 (JP)
(72) Inventor: MIZUNO, Ryo, TOYOTA-SHI, AICHI-KEN, 471-8571 (JP); MAKITA, Takanari, KARIYA-CITY, AICHI-PREF, 448-8661 (JP)
(74) Representative: Cabinet Beau de Loménie

(57) **Abstract**

An information processing device that includes: a processor (20A) configured to: receive a transmission frame containing vehicle information; disassemble the transmission frame into signals; and store a value of each signal in an array pre-prepared by the signal and an ID of the transmission frame according to a reception sequence of the signals.

## Description

### BACKGROUND

### Technical Field

The present disclosure relates to an information processing device that stores signals relating to transmission frames containing vehicle information, and to a vehicle, an i information processing method, and an information processing program of the same.

### Related Art

Japanese Patent Application Laid-Open (JP-A) No. 2021-083126 discloses an electronic control unit connected to an onboard network system including plural devices that perform communication relating to frames. This electronic control unit includes a first I control unit and a second control unit. In cases in which a transmission frame conforms to a first rule, the first control unit transmits the transmission frame to the second control unit. In cases in which the transmitted transmission frame conforms to a second rule, the second control unit transmits the transmission frame to the onboard network.

The electronic control unit disclosed in JP-A No. 2021-083126 needs time for an i application to perform a search in order to acquire vehicle information.

### SUMMARY

An object of the present disclosure is to provide an information processing device, a vehicle, an information processing method, and a non-transitory computer-readable I recording medium recorded with an information processing program, wherein an application utilizing vehicle information can more easily search for required information by referencing arrays of values stored by signal than in cases in which the application references transmission frames.

A first aspect of the present disclosure is an information processing device that includes: a processor configured to: receive a transmission frame containing vehicle information; disassemble the transmission frame into signals; and store a value of each signal in an array pre-prepared by the signal and an ID of the transmission frame according to a reception sequence of the signals. The information processing device of the first aspect enables an application utilizing vehicle information to more easily search for required I information by referencing arrays of values stored by signal than in cases in which the application references transmission frames.

A second aspect of the present disclosure is the information processing device of the first aspect, wherein: in addition to a first element for storing a value of the signal, the array also contains a second element indicating a number of appearances of the signal corresponding to the array; and the processor is configured to store the value of the signal at the number of appearances in the first element corresponding to the number of appearances.

The information processing device of the second aspect enables initial values of data and acquired values of data to be stored distinct from one another.

A third aspect of the present disclosure is the information processing device of the second aspect, wherein: a number of the first elements in the array is equal to or greater than a number of transmission frames for a case in which the processor has received a transmission frame at a shortest cycle with respect to a reference cycle for receiving a transmission frame.

The information processing device of the third aspect enables overspill of transmission frames to be suppressed.

A fourth aspect of the present disclosure is the information processing device of any of the first to the third aspects, wherein the array is classified for each data-type predefined for the signal.

The information processing device of the fourth aspect enables a saving in memory resource.

A fifth aspect of the present disclosure is a vehicle that includes: the information processing device of any of the first to the fourth aspect; and one or more controllers configured to transmit transmission frames to the information processing device.

The vehicle of the fifth aspect enables an application utilizing vehicle information to more easily search for required information by referencing arrays of values stored by signal than in cases in which the application references transmission frames.

A sixth aspect of the present disclosure is an information processing method, that includes, by a processor: receiving a transmission frame containing vehicle information; disassembling the transmission frame into signals; and storing a value of each signal in an array pre-prepared by the signal and an ID of the transmission frame according to a reception sequence of the signals.

The information processing method of the sixth aspect enables an application utilizing vehicle information to more easily search for required information by referencing arrays of values stored by signal than in cases in which the application references transmission frames.

A seventh aspect of the present disclosure is a non-transitory computer-readable recording medium storing an information processing program executable by a computer to perform processing, wherein the processing comprises: receiving a transmission frame containing vehicle information; disassembling the transmission frame into signals; and storing a value of each signal in an array pre-prepared by the signal and an ID of the transmission frame according to a reception sequence of the signals.

The information processing program of the seventh aspect enables an application utilizing vehicle information to more easily search for required information by referencing arrays of values stored by signal than in cases in which the application references transmission frames.

In the present disclosure, an application utilizing vehicle information can more easily search for required information by referencing arrays of values stored by signal than in cases in which the application references transmission frames.

### BRIEF DESCRIPTION OF DRAWINGS

Fig. 1 is a block diagram illustrating an example of a hardware configuration of a vehicle of an exemplary embodiment;
Fig. 2 is a block diagram illustrating an example of a functional configuration of an onboard unit of an exemplary embodiment;
Fig. 3 is a block diagram illustrating an example of data stored in storage of an exemplary embodiment;
Fig. 4 is a schematic diagram illustrating an example of a configuration of a data-type database of an exemplary embodiment;
Fig. 5 is a schematic diagram illustrating an example of a configuration of a correspondence database of an exemplary embodiment;
Fig. 6 is a schematic diagram illustrating an example of a configuration of an information ID database of an exemplary embodiment;
Fig. 7 is a schematic diagram illustrating an example of a configuration of a first element database of an exemplary embodiment;
Fig. 8 is a schematic diagram illustrating an example of a configuration of transmission frames in an exemplary embodiment;
Fig. 9 is a schematic diagram illustrating an example of a configuration of an array database of an exemplary embodiment;
Fig. 10 is a flowchart illustrating an example of decision processing of an exemplary embodiment; and
Fig. 11 is a flowchart illustrating an example of storage processing of an exemplary embodiment.

### DETAILED DESCRIPTION

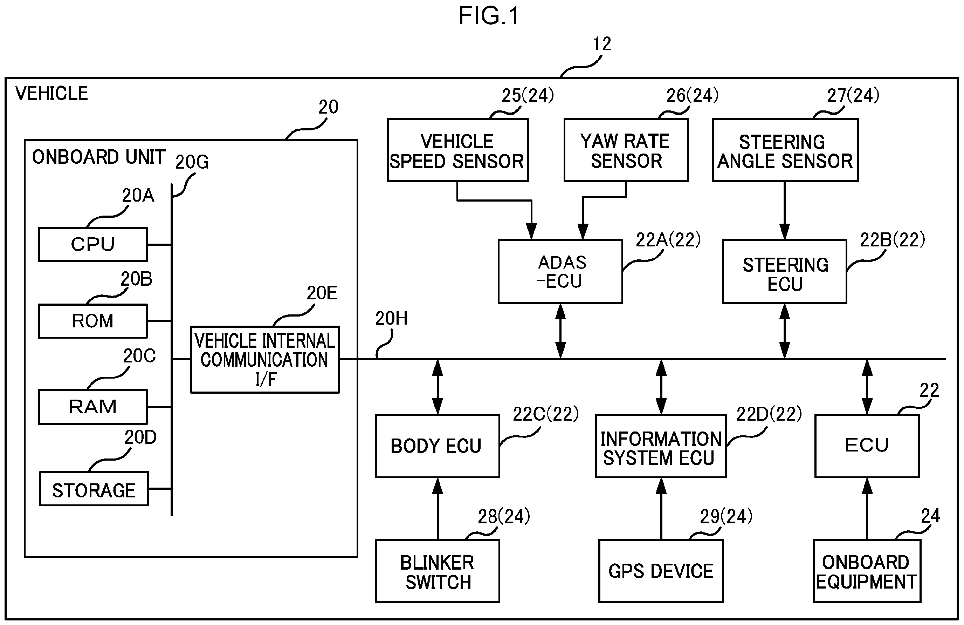

As illustrated in Fig. 1, a vehicle 12 of an exemplary embodiment is configured including an onboard unit 20 serving as an example of an information processing device, one or plural electronic control units (ECUs) 22 each serving as an example of a controller, and plural items of onboard equipment 24.

The onboard unit 20 is configured including a central processing unit (CPU) 20A serving as an example of a hardware processor, read only memory (ROM) 20B serving as an example of memory, random access memory (RAM) 20C, storage 20D, and a vehicle internal communication interface (I/F) 20E. The CPU 20A, the ROM 20B, the RAM 20C, the storage 20D, and the vehicle internal communication I/F 20E are connected through an internal bus 20G so as to be capable of communicating with other another.

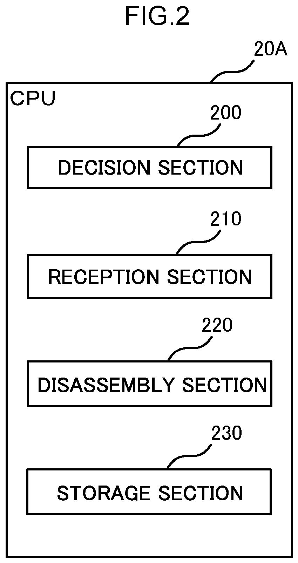

The CPU 20A executes various programs and controls various sections. Namely, the CPU 20A reads a program from the ROM 20B or the storage 20D and executes the program using the RAM 20C as a workspace. In the present exemplary embodiment, a control program 250, described later, is stored in the storage 20D. By executing the control program 250, the CPU 20A functions as a decision section 200, a reception section 210, a disassembly section 220, and a storage section 230, as illustrated in Fig. 2.

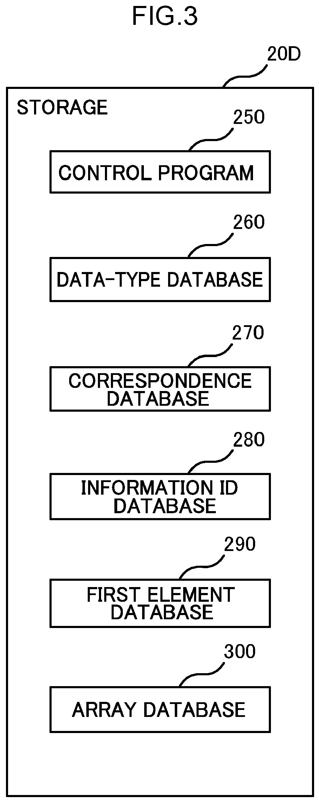

The ROM 20B stores various programs and various data. The RAM 20C acts as a workspace to temporarily store programs or data. The storage 20D is configured by a hard disk drive (HDD) or a solid state drive (SSD), and stores various programs including an operating system, as well as various data. As illustrated in Fig. 3, the storage 20D of the present exemplary embodiment stores the control program 250, a data-type database 260, a correspondence database 270, an information identification (ID) database 280, a first element database 290, and an array database 300. These databases are described in more detail later.

The vehicle internal communication I/F 20E is an interface for connecting to the ECUs 22. A communication standard using a Controller Area Network (CAN) protocol is employed for this interface. The vehicle internal communication I/F 20E is connected to an external bus 20H.

The ECUs 22 include at least an Advanced Driver Assistance System (ADAS)-ECU 22A, a steering ECU 22B, a body ECU 22C, and an information system ECU 22D. The ECUs 22 transmit transmission frames containing vehicle information such as the speed of the vehicle 12 to the onboard unit 20.

The ADAS-ECU 22A performs overall control of an Advanced Driver Assistance System. A vehicle speed sensor 25 and a yaw rate sensor 26 are connected to the ADAS-ECU 22A and configure onboard equipment 24.

The steering ECU 22B controls power steering. A steering angle sensor 27 configuring onboard equipment 24 is connected to the steering ECU 22B. The steering angle sensor 27 is a sensor for detecting the steering angle during steering.

The body ECU 22C controls lights such as blinkers. A blinker switch 28 configuring onboard equipment 24 is connected to the body ECU 22C.

The information system ECU 22D controls a car navigation system, audio, and so on. A GPS device 29 configuring the onboard equipment 24 is connected to the information system ECU 22D. The GPS device 29 is a device for measuring the current position of the vehicle 12. The GPS device 29 includes an antenna that receives signals from GPS satellites. Note that the GPS device 29 may be directly connected to the onboard unit 20.

The control program 250 serves as an information processing program, and is a program for controlling the onboard unit 20.

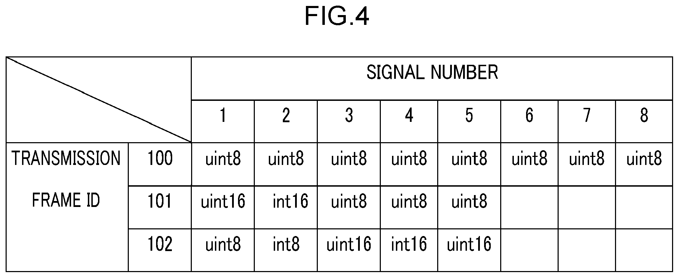

The data-type database 260 stores transmission frame IDs and a signal data-type for each signal number. For example, as illustrated in Fig. 4, data-types uint8, uint16, uint32, uint64, int8, int16, int32, and int64 are specified for each signal number of the transmission frame IDs. Note that "int" indicates an integer data-type with a sign, "uint" indicates an unsigned integer data-type, and the numerical suffix indicates the number of bits. The data-types and notation of data-types are not limited thereto.

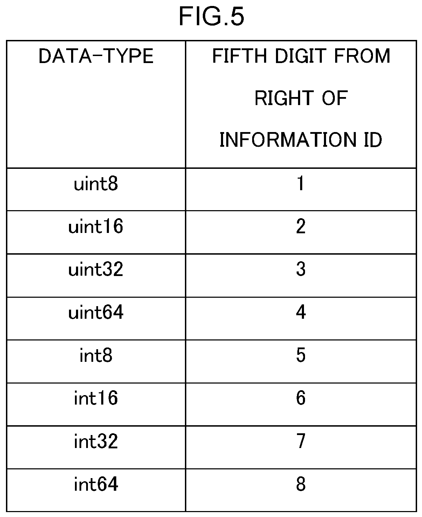

The correspondence database 270 stores a defined value for each signal data-type. For example, as illustrated in Fig. 5, the values 1 to 8 are applied in sequence to the data-types uint8, uint16, uint32, uint64, int8, int16, int32, and int64. Note that although the defined value for each signal data-type corresponds to a value of the fifth digit from the right in the information ID as described later, there is no limitation thereto. For example, the defined value for each signal data-type may be value of the first digit from the right in the information ID.

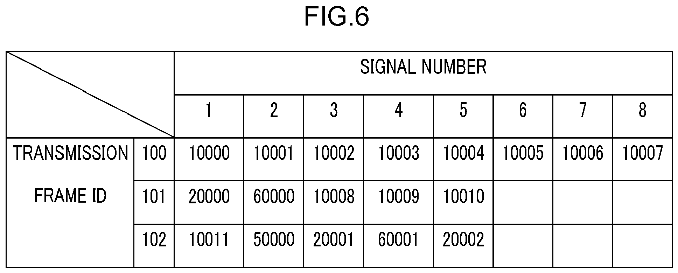

The information ID database 280 stores transmission frame IDs and an information ID for each signal number. In the present exemplary embodiment, a five digit value is set as the information ID, and the information ID is set according to data-type and sequence of acquisition. For example, as illustrated in Fig. 6, the values 10000 to 10011 are set for the twelve instances of uint8, for which the value "1" is specified in the correspondence database 270, by setting in the sequence in which the signals appeared. Similarly, the values 20000 to 20002 are set for the three instances of uint16, for which the value "2" is specified in the correspondence database 270, by setting in the sequence in which the signals appeared. Moreover, the value 50000 is set for the single instance of int8, for which the value "5" is specified in the correspondence database 270. Furthermore, the values 60000 to 60001 are set for the two instances of int16, for which the value "6" is specified in the correspondence database 270, by setting in the sequence in which the signals appeared.

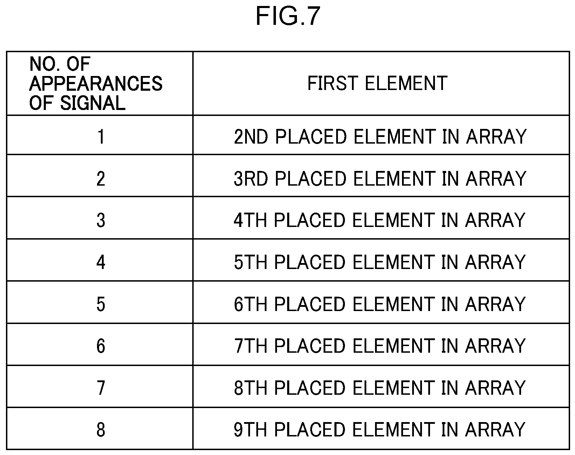

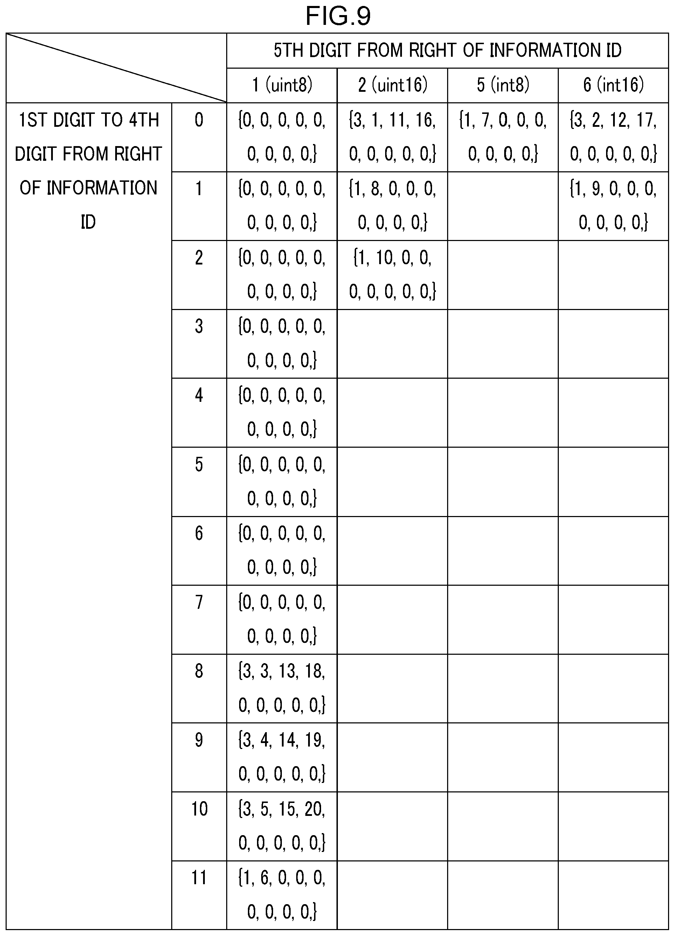

The first element database 290 is stored with which first element of an array corresponds to which number of appearances of a signal in the array. In particular, storage arrays are provided as arrays by information ID. For example, as illustrated in Fig. 6 and Fig. 9, the storage arrays are arrays stored with nine items of information, and the number of appearances of a signal having a target information ID is stored as a second element which is the first placed element in the storage array. The signal for the target information ID is stored in the first element that is one of the second to the ninth placed elements in the storage array. As illustrated in Fig. 7, the value of the first appearing signal having a given information ID is stored as the second placed element of the corresponding storage array. The values of the second to eighth appearing signals appeared having this information ID are respectively stored in the third to ninth placed elements of the corresponding storage array.

The array database 300 stores arrays prepared by signal data-type. In particular, the array database 300 stores arrays classified according to the value of the fifth digit from the right of the information ID, and according to the value of the first to the fourth digits from the right of the information ID.

Fig. 2 is a block diagram illustrating an example of functional configuration of the CPU 20A. As illustrated in Fig. 2, the CPU 20A includes the decision section 200, the reception section 210, the disassembly section 220, and the storage section 230. The respective functional configurations are implemented by the CPU 20A reading and executing the control program 250 stored in the storage 20D.

The decision section 200 includes a function to decide the information ID to be stored in the information ID database 280. In particular, the decision section 200 reads the signal data-type stored in the data-type database 260. The decision section 200 then reads from the correspondence database 270 the value that corresponds to the read data-type for the fifth digit from the right in the information ID. The decision section 200 then decides the value read from the correspondence database 270 as the fifth digit from the right in the information ID to be stored in the information ID database 280. The decision section 200 also decides the first to the fourth digits from the right in the information ID as a serial number starting from 0 for each data-type.

Explanation follows regarding the functionality of the decision section 200, with reference to an example. For example, in the data-type database 260 illustrated in Fig. 4, the data-type of the fourth placed signal in the transmission frame with the ID 101 is uint8. Based on the correspondence database 270 illustrated in Fig. 5, the value of the fifth digit from the right in the information ID corresponding to a signal with the data-type uint8 is 1. Thus, the fifth digit from the right in the information ID corresponding to this signal is decided as 1. Since this signal is the tenth placed appearance of a signal from out of the signals with the data-type uint8, the information ID corresponding to this signal is decided as 10009 as illustrated in Fig. 6.

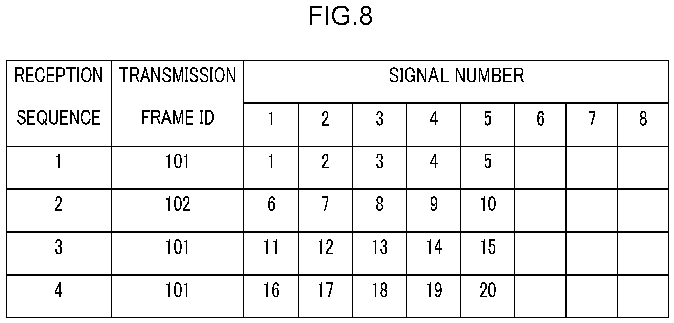

The reception section 210 includes a function to receive transmission frames containing vehicle information through the vehicle internal communication I/F 20E. For example, the reception section 210 receives, through the vehicle internal communication I/F 20E, transmission frames that each contain an ID and signals associated with a signal number such as those illustrated in Fig. 8.

The disassembly section 220 includes a function to disassemble transmission frames received by the reception section 210 into signals therein.

The storage section 230 includes a function to store a value for the signals disassembled by the disassembly section 220 in the sequence in which the signals were received by storing in arrays pre-prepared by transmission frame ID and by the signal. In particular, the storage section 230 acquires the transmission frame ID and signal number corresponding to each signal in the reception sequence. The storage section 230 then checks the information ID database 280 for the information ID corresponding to the acquired transmission frame ID and to the acquired signal number. Although a five digit value is applied as the information ID in the present exemplary embodiment, there is no limitation thereto. The storage section 230 then reads the array database 300, and decides the array in which to store the value of the signal disassembled by the disassembly section 220 based on the fifth digit from the right of the checked information ID, and based on the first digit to the fourth digit from the right therein. Note that since the value of the fifth digit from the right in the information ID is defined by signal data-type, the arrays are classified by the predefined data-types of the signals.

The storage section 230 also acquires the current number of appearances of the signal corresponding to the decided array. The storage section 230 then reads the first element database 290 to find which is the first element corresponding to the acquired number of appearances. The storage section 230 then stores a value of the signal at this number of appearances in the found first element, this being a first element contained in the decided array. The storage section 230 also updates the second element by incrementing the number of appearances stored as the second element.

Note that in the present exemplary embodiment, the number of first elements contained in the array is set so as to be equal to or greater than the number of transmission frames contained for transmission frames received at a shortest cycle with respect to a reference cycle for the reception section 210 to receive a transmission frame. For example, in cases in which the reference cycle is 50 ms and the reception section 210 has received transmission frames at a shortest cycle of 7 ms, the number of first elements is set to eight as eight first elements will be sufficient.

Explanation follows regarding the functionality of the storage section 230, with reference to an example. For example, supposing the reception section 210 receives the transmission frames illustrated in Fig. 8. In such a case, by checking Fig. 8 against the information ID database 280 illustrated in Fig. 6, signals with the information IDs 20000, 60000, 10008, 10009, 10010, 10011, 50000, 20001, 60001, 20002, 20000, 60000, 10008, 10009, 10010, 20000, 60000, 10008, 10009, 10010 are acquired in this sequence. Thus values from 1 to 20 are stored as values indicating the acquisition sequence of these information IDs of the respective signals.

For example, looking at the information ID for uint8, a signal with the information ID "10008" appeared at sequence positions 3, 13, 18. Thus, as illustrated in Fig. 9, the value {3, 3, 13, 18, 0, 0, 0, 0, 0,} is stored in the storage array for the information ID having the fifth digit of 1 and having the first to fourth digits of 8. As another example, looking at the information ID for int16, a signal with the information ID "60000" appeared at sequence positions 2, 12, 17. Thus, as illustrated in Fig. 9, the value {3, 2, 12, 17, 0, 0, 0, 0, 0,} is stored in the storage array for the information ID having the fifth digit of 6 and having the first to fourth digits of 0.

### Processing Flow

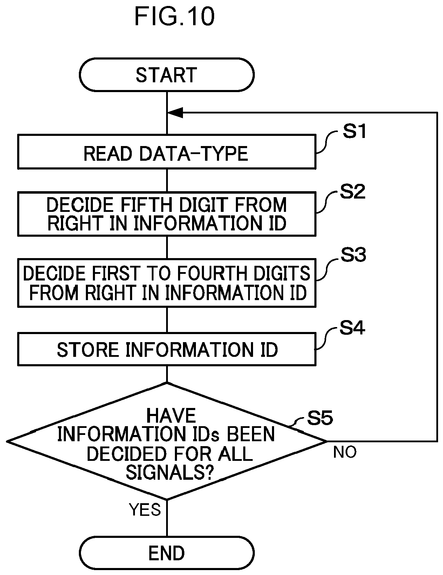

Next, explanation follows regarding decision processing executed by the CPU 20A of the onboard unit 20 reading the control program 250, with reference to Fig. 10.

At step S1 in Fig. 10, the CPU 20A reads the data-type of a signal stored in the data-type database 260.

At step S2, the CPU 20A decides the fifth digit from the right in the information ID applied to the signal of the data-type read at step S1. In particular, the CPU 20A reads from the correspondence database 270 the value of the fifth digit from the right in the information ID corresponding to the data-type read at step S1, and decides this value as the fifth digit from the right in the information ID.

At step S3, the CPU 20A decides a serial number starting from 0 for each data-type as the first digit to the fourth digit from the right in the information ID applied to the signal with the data-type read at step S1.

At step S4, the CPU 20A stores the information ID decided at step S2 and step S3 in the information ID database 280 as the information ID applied to the signal with the data-type read at step S1.

At step S5, the CPU 20A determines whether or not information IDs have been decided for all of the signals having the data-types stored in the data-type database 260. The current round of decision processing is ended in cases in which the CPU 20A determines that information IDs have been decided for all of the signals having the data-types stored in the data-type database 260 (step S5: YES). On the other hand, the processing returns to step S1 in cases in which the CPU 20A determines that information IDs have not been decided for all of the signals having the data-types stored in the data-type database 260 (step S5: NO).

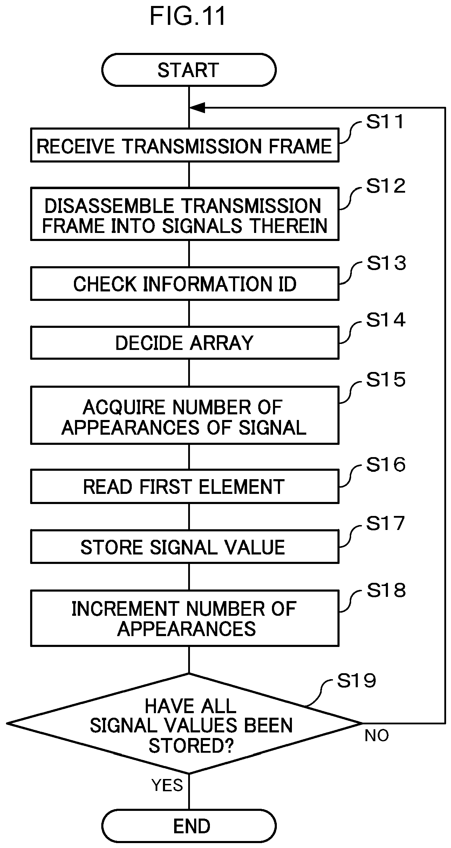

Next, explanation follows regarding storage processing executed by the CPU 20A of the onboard unit 20 reading the control program 250, with reference to Fig. 11.

At step S11, the CPU 20A receives a transmission frame containing vehicle information through the vehicle internal communication I/F 20E.

At step S12, the CPU 20A disassembles the transmission frame received at step S11 into signals therein.

At step S13, the CPU 20A checks the information IDs corresponding to the signals disassembled at step S12. In particular, the CPU 20A reads the information IDs associated with the transmission frame ID and signal numbers corresponding to the disassembled signals from the information ID database 280.

At step S14, the CPU 20A decides on an array for storing the value of the signal disassembled at step S12. In particular, based on the fifth digit from the right and on the first digit to the fourth digit from the right in each of the information IDs checked at step S13, the CPU 20A decides the position in the array database 300 of the array for storing the signal value.

At step S15, the CPU 20A acquires the number of appearances of the signal corresponding to the array decided at step S14.

At step S16, the CPU 20A reads from the first element database 290 the first element that corresponds to the number of appearances acquired at step S15.

At step S17, the CPU 20A then stores a value of a signal at the number of appearances read at step S16 in the first element, which is the first element contained in the array decided at step S14.

At step S18, the CPU 20A increments the number of appearances stored in the second element contained in the array decided at step S14.

At step S19, the CPU 20A determines whether or not the values of all the signals contained in the transmission frame received at step S11 have been stored in the array database 300. The current round of storage processing is ended in cases in which the CPU 20A determines that the values of all the signals contained in the received transmission frame have been stored in the array database 300 (step S19: YES). On the other hand, the processing returns to step S11 in cases in which the CPU 20A determines that the values of all the signals contained in the received transmission frame have not been stored in the array database 300 (step S19: NO).

### Summary of Exemplary Embodiment

The onboard unit 20 of the present exemplary embodiment enables an application utilizing vehicle information to more easily search for required information by referencing arrays of values stored by signal than in cases in which the application references transmission frames. Namely, this enables a shortening in search time or a saving in search resource to be achieved.

Note that in addition to the plural first elements that store signal values, the array of the present exemplary embodiment also contains the second element that indicates the number of appearances of the signal in the corresponding array. Moreover, the CPU 20A of the onboard unit 20 stores a value of signal at a given number of appearances in the first element at the position corresponding to this number of appearances. This enables initial values of data and acquired values of data to be stored distinct from one another.

Moreover, the number of first elements in the arrays of the present exemplary embodiment is set so as to be equal to or greater than the number of transmission frames contained for transmission frames received at a shortest cycle with respect to a reference cycle for the reception section 210 to receive a transmission frame. This enables overspill of transmission frames to be suppressed.

Moreover, in the array of the present exemplary embodiment, the signals are classified by predefined data-types. This enables a saving in memory resource.

Moreover, the vehicle 12 of the present exemplary embodiment includes the onboard unit 20 and the one or plural ECUs 22. This enables an application utilizing vehicle information to more easily search for the required information by referencing the arrays of values stored by signal than in cases in which the application references transmission frames.

### Remarks

Note that the various processing executed by the CPU 20A reading and executing software (a program) in the above exemplary embodiment may be executed by various types of processors other than a CPU. Such processors include programmable logic devices (PLDs) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). The various processing may be executed by any one of these various types of processors, or may be executed by a combination of two or more of the same type or different types of processors (such as plural FPGAs, or a combination of a CPU and an FPGA). The hardware structure of these various types of processors is more particularly an electric circuit combining circuit elements such as semiconductor elements.

Although in the above exemplary embodiment described above the control program 250 is in a format pre-stored (installed) in the storage 20D, there is no limitation thereto. The program may be provided in a format recorded on a recording medium such as compact disc read only memory (CD-ROM), digital versatile disc read only memory (DVD-ROM), or universal serial bus (USB) memory. Alternatively, the program may be provided in a format downloadable from an external device through a network.

The flow of processing described in the above exemplary embodiment is merely an example, and redundant steps may be omitted, new steps may be added, or the processing sequence may be changed within a range not departing from the spirit thereof.

Moreover, the various configuration of the vehicle 12 described in the above exemplary embodiment is merely an example, and may be modified according to circumstances within a range not departing from the spirit thereof.

## Claims

1. An information processing device (20) comprising:
a processor (20A) configured to:
receive a transmission frame containing vehicle information;
disassemble the transmission frame into signals; and
store a value of each signal in an array pre-prepared by the signal and an ID of the transmission frame according to a reception sequence of the signals.

2. The information processing device (20) of claim 1, wherein:
in addition to a first element for storing a value of the signal, the array also contains a second element indicating a number of appearances of the signal corresponding to the array; and
the processor (20A) is configured to store the value of the signal at the number of appearances in the first element corresponding to the number of appearances.

3. The information processing device (20) of claim 2, wherein:
a number of the first elements in the array is equal to or greater than a number of transmission frames for a case in which the processor (20A) has received a transmission frame at a shortest cycle with respect to a reference cycle for receiving a transmission frame.

4. The information processing device (20) of any one of claim 1 to claim 3, wherein the array is classified for each data-type predefined for the signal.

5. A vehicle comprising:
the information processing device (20) of any one of claim 1 to claim 4; and
one or more controllers (22) configured to transmit transmission frames to the information processing device (20).

6. An information processing method, comprising, by a processor (20A):
receiving a transmission frame containing vehicle information;
disassembling the transmission frame into signals; and
storing a value of each signal in an array pre-prepared by the signal and an ID of the transmission frame according to a reception sequence of the signals.

7. The information processing method of claim 6, wherein:
in addition to a first element for storing a value of the signal, the array also contains a second element indicating a number of appearances of the signal corresponding to the array; and
the value of the signal at the number of appearances is stored in the first element corresponding to the number of appearances.

8. The information processing method of claim 7, wherein:
a number of the first elements in the array is equal to or greater than a number of transmission frames for a case in which a transmission frame has been received at a shortest cycle with respect to a reference cycle for receiving a transmission frame.

9. The information processing method of any one of claim 6 to claim 8, wherein the array is classified for each data-type predefined for the signal.

10. A non-transitory computer-readable recording medium storing an information processing program executable by a computer (20A) to perform processing, wherein the processing comprises:
receiving a transmission frame containing vehicle information;
disassembling the transmission frame into signals; and
storing a value of each signal in an array pre-prepared by the signal and an ID of the transmission frame according to a reception sequence of the signals.

11. The non-transitory computer-readable recording medium of claim 10, wherein:
in addition to a first element for storing a value of the signal, the array also contains a second element indicating a number of appearances of the signal corresponding to the array; and
the value of the signal at the number of appearances is stored in the first element corresponding to the number of appearances.

12. The non-transitory computer-readable recording medium of claim 11, wherein:
a number of the first elements in the array is equal to or greater than a number of transmission frames for a case in which a transmission frame has been received at a shortest cycle with respect to a reference cycle for receiving a transmission frame.

13. The non-transitory computer-readable recording medium of any one of claim 10 to claim 12, wherein the array is classified for each data-type predefined for the signal.
